# FASCICULE DE BREVET EUROPEEN

(11) **EP 2 825 283 B1**
(45) Date de publication et mention de la délivrance du brevet: **25.05.2016**
(21) Numéro de dépôt: 13711089.6
(22) Date de dépôt: 04.03.2013
(51) Int. Cl.: B01D 53/04, B01D 53/26

(54) **INSTALLATION POUR LA PRODUCTION D'AIR MÉDICAL**
VORRICHTUNG ZUR HERSTELLUNG VON MEDIZINISCHEN LUFT
EQUIPMENT FOR PRODUCING MEDICAL AIR

(30) Priorité: 14.03.2012 FR 1252289
(43) Date de publication de la demande: 21.01.2015
(73) Titulaire: Mil'S, 69740 Genas (FR)
(72) Inventeur: GENTIEN, Dominique, F-69004 Lyon (FR)
(74) Mandataire: Delorme, Nicolas
(86) Numéro de dépôt international: PCT/FR2013/050457
(87) Numéro de publication internationale: WO 2013/135992

(56) Documents cités:
- EP-A1- 0 884 085
- EP-A2- 0 072 463
- EP-A2- 0 135 921
- US-A- 3 944 400
- US-A- 4 950 311

## Description

La présente invention concerne une installation pour la production d'air médical.

Un tel type d'installation trouve notamment application en milieu hospitalier, l'air médical produit étant susceptible d'être utilisé comme gaz d'assistance respiratoire dans les blocs opératoires ou les salles de réanimation.

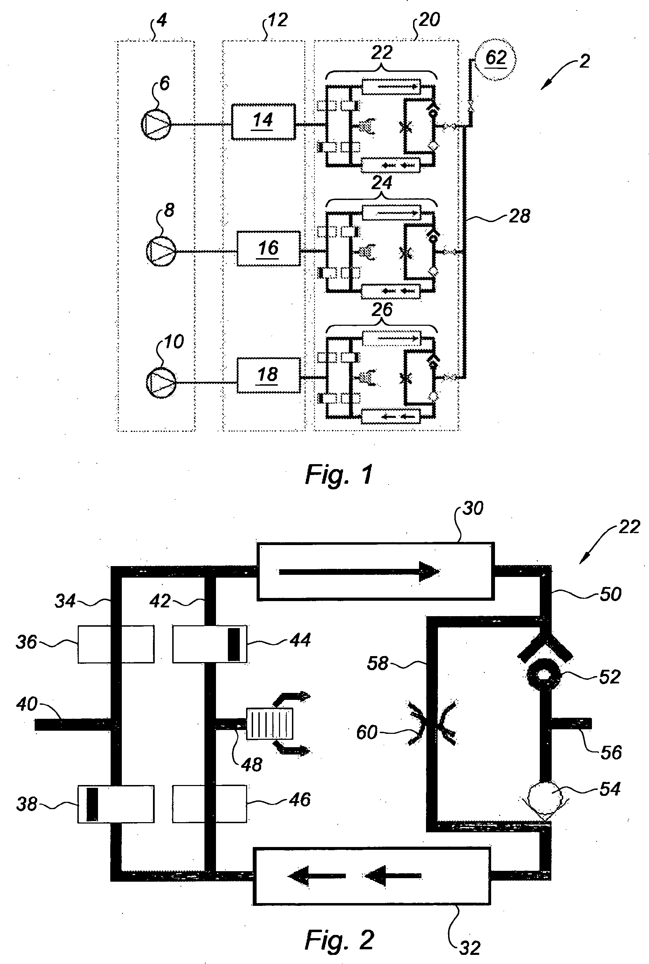

On connait de l'état de la technique une installation 2 pour la production d'air médical (représentée à la figure 1). L'installation 2 est conçue pour fournir un débit maximal dₘₐₓ.

L'installation 2 comporte un groupe de compression 4 composé de compresseurs 6, 8 et 10 identiques. Les compresseurs 6, 8 et 10 sont des compresseurs à vis conçus pour fournir chacun un débit d'air égal au débit d'air maximal dₘₐₓ de l'installation 2.

Le compresseur 6 est prévu pour fonctionner en conditions normales d'utilisation. Le compresseur 8 est prévu pour fonctionner lorsque le compresseur 6 est au repos ou en maintenance. Le compresseur 10 est prévu pour fonctionner lorsque le compresseur 6 est au repos ou en maintenance et que le compresseur 8 est en panne. Ces différents compresseurs sont utilisés de façon alternative pour que leurs temps de fonctionnement respectifs soient sensiblement identiques.

L'installation 2 comporte un groupe de filtration 12 composé de filtres 14, 16 et 18 identiques montés en série avec les compresseurs 6, 8 et 10.

L'installation 2 comporte un groupe de séchage 20 composé de sécheurs par adsorption 22, 24 et 26 identiques. Les sécheurs 22, 24, et 26 sont montés en série avec les filtres 14, 16 et 18.

Le sécheur 22 (représenté à la figure 2) comprend des colonnes 30 et 32 montées en parallèle. Les colonnes 30 et 32 sont chacune équipées d'un lit de matière dessicante. La colonne 30 est prévue pour sécher l'air issu du filtre 14 tandis que la colonne 32 est régénérée, et en alternance la colonne 32 est prévue pour sécher l'air issu du filtre 14 tandis que la colonne 32 est régénérée.

Le sécheur 22 comprend également des moyens de circulation d'air raccordant fluidiquement les colonnes 30 et 32. Ces moyens de circulation d'air sont constitués de :
- une tubulure 34 reliant les extrémités amont des colonnes 30 et 32, équipée de deux vannes 36 et 38 tout ou rien ;
- une tubulure 40 connectée à la tubulure 34, prévue pour amener l'air issu du filtre 14 ;
- une tubulure 42 reliant les extrémités amont des colonnes 30 et 32, équipée de deux vannes 44 et 46 tout ou rien ;
- une tubulure 48 connectée à la tubulure 42 entre les vannes tout ou rien 44 et 46, équipée d'un silencieux, et prévue pour évacuer dans l'air ambiant l'air issu de la colonne 30 ou 32 régénérée ;
- une tubulure 50 reliée aux extrémités aval des colonnes 30 et 32, équipée d'un clapet anti-retour 52 autorisant l'écoulement de l'air dans un premier sens, et d'un clapet anti-retour 54 autorisant l'écoulement de l'air dans un second sens ;
- une tubulure 56 connectée à la tubulure 50 entre les clapets anti-retour 52 et 54 ; et
- une tubulure 58 montée en parallèle à la tubulure 50, équipée d'un orifice calibré 60.

L'orifice calibré 60 est conçu de telle sorte que 80 % du volume d'air issu de la colonne 30 soit dirigé vers un réservoir 62, et 20% du volume d'air issu de la colonne 30 soit dirigé vers la colonne 32 pour la régénérer, et inversement lorsque la colonne 32 sèche l'air issu du filtre 14.

La consommation d'air médical dans un hôpital est irrégulière. Celle-ci est élevée le matin et faible le restant de la journée. Un inconvénient de l'installation 2 est qu'elle fournit en permanence le débit maximal dₘₐₓ. Ce débit dₘₐₓ, s'il est sensiblement égal au débit d'air médical consommé le matin, est largement supérieur au débit d'air médical consommé pendant le restant de journée. Dans ces conditions, la consommation électrique inhérente au fonctionnement des compresseurs est accrue inutilement.

L'utilisation de compresseurs 6, 8 et 10 à vis est désavantageuse en ce qu'ils imposent des contraintes de fonctionnement. En effet, ceux-ci ne peuvent être mis à l'arrêt, et en alternance en marche, facilement. En conséquence, lorsqu'une production d'air n'est momentanément pas souhaitée, ces compresseurs continuent de fonctionner, de telle sorte que l'air fourni est ramené à l'aspiration. Un tel fonctionnement est dit « à vide ». Le temps durant lequel le compresseur fonctionne à vide est un temps non productif accroissant inutilement la consommation électrique.

En outre, il est nécessaire d'élever la température de ces compresseurs 6, 8 et 10 afin d'éviter que l'huile ne se mélange à l'eau présente dans l'air ambiant. Un tel mélange eau/huile serait préjudiciable à la bonne lubrification des compresseurs 6, 8 et 10 et pourrait entrainer leur casse

L'utilisation d'un compresseur à vis est également désavantageuse en ce qu'une partie de l'huile est emportée par l'air comprimé et est retenue par les filtres 14, 16 et 18. Il en résulte une perte de charge élevée et la nécessité de remplacer fréquemment les filtres 14, 16 et 18.

Enfin, lorsque que les sécheurs 20 et 22 sont au repos, la pression à l'intérieur de leurs colonnes respectives tend à décroitre en raison de micro-fuites. L'air ambiant pénètre à l'intérieur de ces colonnes et le lit de matière dessicante est pollué. Ainsi, lorsque le sécheur 20 ou 22 est remis en service, sa capacité de séchage est détériorée temporairement.

EP0072463 divulgue une installation pour la production d'air sec comportant un groupe de séchage comportant plusieurs colonnes de séchage par adsorption.

L'invention vise à pallier à tout ou partie des inconvénients précités.

L'invention concerne une installation pour la production d'air médical conçue pour fournir un débit maximal dₘₐₓ, caractérisée en ce qu'elle comporte :
- un réservoir et un groupe de compression comportant :
   - un premier ensemble comprenant au moins deux compresseurs identiques, montés en parallèles, adaptés pour fournir conjointement un débit d'air égal au débit maximal dₘₐₓ de l'installation; et
   - un second ensemble comprenant au moins deux compresseurs montés en parallèles aves les deux compresseurs du premier ensemble, identiques aux deux compresseurs du premier ensemble, et chacun prévu pour fonctionner à la place d'un compresseur du premier ensemble ;
- un groupe de séchage comportant des premier et second sécheurs par adsorption, le second sécheur étant prévu pour fonctionner en alternance à la place du premier sécheur, les premier et second sécheurs comprenant chacun :
   - des première et seconde colonnes montées en parallèle, chacune équipée d'au moins un lit de matière dessicante, la première colonne étant prévue pour sécher l'air issu du groupe de compression tandis que la seconde colonne est régénérée, et en alternance la seconde colonne étant prévue pour sécher l'air issu du groupe de compression tandis que la première colonne est régénérée ;
   - des moyens de circulation d'air raccordant fluidiquement les première et seconde colonnes;
   - une unité de commande des moyens de circulation d'air configurée pour, pendant un temps T_{N} :
      o conduire l'air issu du groupe de compression à l'intérieur de la première colonne ;
      o déterminer le volume total d'air traversant la première colonne;
      o répartir le volume d'air issu de la première colonne en un premier volume dirigé vers le réservoir, et en un second volume, dit de régénération, dirigé vers la seconde colonne pour la régénérer, le volume de régénération étant fonction du volume total d'air ayant traversé la seconde colonne pendant un temps T_{N-1} précédant immédiatement le temps T_{N}. Les compresseurs du premier ensemble et les compresseurs du second ensemble sont identiques, autrement dits sont aptes à fournir un même débit d'air.

Dans ces conditions, les compresseurs du second ensemble peuvent se substituer librement deuxième compresseurs du premier ensemble, par exemple lorsque ceux-ci sont au repos, en maintenance, ou en panne.

Le débit maximal dₘₐₓ est obtenu par le fonctionnement conjoint, c'est-à-dire simultané, des compresseurs du premier ensemble. Un débit inférieur au débit maximal dₘₐₓ peut être obtenu par le fonctionnement d'une fraction seulement des compresseurs du premier ensemble.

Dans ces conditions, le débit de l'installation peut être adapté à la consommation d'air médical. En cas de forte consommation d'air médical, les compresseurs du premier ensemble fonctionnent conjointement. En cas de faible consommation d'air médical, seul une fraction des compresseurs du premier ensemble fonctionne. La consommation énergétique inhérente au fonctionnement des compresseurs est alors minimisée.

En outre, l'unité de commande des moyens de circulation d'air est configurée de telle sorte que, quel que soit le débit d'air fourni par le groupe de compression, le volume de régénération dirigé vers la colonne régénérée, soit fonction du volume d'air ayant traversé cette même colonne lorsque celle-ci était utilisée pour le séchage.

Ainsi, la régénération des première et deuxième colonnes n'est pas détériorée lorsque le débit d'air fourni par le groupe de compression est inférieur au débit dₘₐₓ.

L'installation selon l'invention peut comporter une ou plusieurs des caractéristiques suivantes.

Avantageusement, le premier ensemble comprend plus de deux compresseurs, et le second ensemble comprend uniquement deux compresseurs.

Suivant une caractéristique, les temps T_{N-1} et T_{N} sont égaux ; et l'unité de commande des moyens de circulation est configurée pour que, pendant le temps T_{N,} le volume de régénération soit compris entre 10% et 25%, et de préférence entre 15% et 20%, du volume d'air ayant traversé la seconde colonne pendant le temps T_{N-1}.

Dans une première forme d'exécution, les moyens de circulation d'air de chaque sécheur comprennent:
- une première tubulure reliée aux extrémités aval des première et seconde colonnes, équipée d'un premier clapet anti-retour autorisant l'écoulement de l'air dans un premier sens, et d'un second clapet anti-retour autorisant l'écoulement de l'air dans un second sens ;
- au moins une deuxième tubulure montée en parallèle à la première tubulure, équipée d'une vanne tout ou rien et d'un orifice calibré ;
- une troisième tubulure connectée d'une part à la première tubulure entre les premier et second clapets et d'autre part au réservoir ; et
   l'unité de commande est configurée pour commander les vannes tout ou rien de manière à diriger le volume de régénération vers la seconde colonne pour la régénérer.

Par « vanne tout ou rien » on entend une vanne positionnable dans deux états : un état passant et un état bloquant.

Dans une seconde forme d'exécution, les moyens de circulation d'air de chaque sécheur comprennent:
- une première tubulure reliée aux extrémités aval des première et seconde colonnes, équipée d'un premier clapet anti-retour autorisant l'écoulement de l'air dans un premier sens, et d'un second clapet anti-retour autorisant l'écoulement de l'air dans un second sens ;
- une deuxième tubulure montée en parallèle à la première tubulure, équipée d'une vanne proportionnelle ; et
- une troisième tubulure connectée d'une part à la première tubulure entre les premier et second clapets et d'autre part au réservoir ; et
   l'unité de commande est configurée pour commander la vanne proportionnelle de manière à diriger le volume de régénération vers la seconde colonne pour la régénérer.

Par « vanne proportionnelle » on entend une vanne positionnable dans au moins trois états : au moins deux états passant de sections de passage distinctes et un état bloquant.

Dans la première ou la seconde forme d'exécution, les moyens de circulation d'air de chaque sécheur comprennent avantageusement :
- une quatrième tubulure montée en parallèle à la ou chaque deuxième tubulure, équipée de deux orifices calibrés ; et
- une cinquième tubulure connectée d'une part à la quatrième tubulure entre ses orifices calibrés et d'autre part à la troisième tubulure.

Lorsqu'un sécheur est mis au repos, le réservoir maintient les colonnes de ce sécheur sous pression par l'intermédiaire des quatrième et cinquième tubulures. Ainsi, lorsque le sécheur est remis en service, ses performances ne sont plus détériorées temporairement.

Suivant une caractéristique, les moyens de circulation d'air de chaque sécheur comprennent :
- une sixième tubulure reliant les extrémités amont des première et seconde colonnes, équipée de deux vannes tout ou rien ;
- une septième tubulure reliant les extrémités amont des première et seconde colonnes, équipée de deux vannes tout ou rien ;
- une huitième tubulure connectée à la sixième tubulure entre ses deux vannes tout ou rien, prévue pour amener l'air issu du groupe de compression ; et
- une neuvième tubulure connectée à la septième tubulure entre ses deux vannes tout ou rien, prévue pour évacuer dans l'air ambiant l'air issu de la première ou seconde colonne régénérée.

Avantageusement, chaque sécheur comprend des moyens de mesure des teneurs en eau et en dioxyde de carbone de l'air traversant la première colonne ; et
l'unité de commande est configurée pour positionner les vannes tout ou rien de la septième tubulure à l'état bloquant, de manière à interdire la circulation de l'air dans celle-ci pendant un temps T_{N+1} suivant immédiatement le temps T_{N}, lorsque les teneurs en eau et en dioxyde de carbone mesurées pendant le temps T_{N} sont inférieures à des valeurs prédéterminées.

Dans ces conditions, la première colonne est régénérée pendant le temps T_{N+1} uniquement si les teneurs en eau et en dioxyde de carbone mesurées pendant le temps T_{N} sont inférieures aux valeurs prédéterminées, c'est-à-dire uniquement si le lit de matière dessicante de la première colonne nécessite d'être régénérée.

Toujours de manière avantageuse, les première et seconde colonnes de chaque sécheur comprennent un lit de charbon actif et/ou un lit d'hopcalite.

Le lit de charbon actif permet d'éliminer les mauvaises odeurs. Le lit d'hopcalite permet de transformer l'oxyde de carbone extrêmement toxique en dioxyde de carbone moins toxique. L'intégration du lit de charbon actif et/ou du lit d'hopcalite à l'intérieur des colonnes permet de minimiser l'encombrement de l'installation.

De préférence, l'installation comporte :
- des premiers moyens de raccordement agencés pour conduire l'air issu du groupe de séchage au niveau d'une partie inférieure du réservoir ; et
- des seconds moyens de raccordement agencés pour conduire l'air issu d'une partie supérieure du réservoir vers un réseau de distribution d'air médical.

Un tel agencement permet d'homogénéiser l'air conduit au réseau de distribution en limitant la formation de deux couches de gaz à l'intérieur du réservoir, c'est-à-dire la formation d'une couche supérieure de dioxygène léger et d'une couche inférieure de dioxyde carbone plus lourd.

Enfin, les premier, deuxième, troisième et quatrième compresseurs sont avantageusement des compresseurs à spirale sèche.

De tels compresseurs n'utilisent pas d'huile, et ne nécessitent plus de fonctionner à vide. Aussi, le temps durant lequel le compresseur fonctionne est uniquement un temps productif et la consommation électrique pour l'exploitant de l'installation est minimisée. La perte de charge et la fréquence de remplacement des filtres sont également réduites.

L'invention sera mieux comprise à l'aide de la description qui suit en référence au dessin schématique annexé représentant, à titre d'exemple, une installation pour la production d'air médical selon l'invention.
Figure 1 est une représentation schématique d'une installation connue de l'état de la technique ;
Figure 2 est une représentation schématique d'un sécheur par adsorption équipant l'installation de figure 1 ;
Figure 3 est une représentation schématique d'une installation selon l'invention ;
Figure 4 est une représentation schématique d'un sécheur par adsorption équipant l'installation de figure 3 ; et
Figure 5 est une représentation schématique d'une variante du sécheur par adsorption de figure 4.

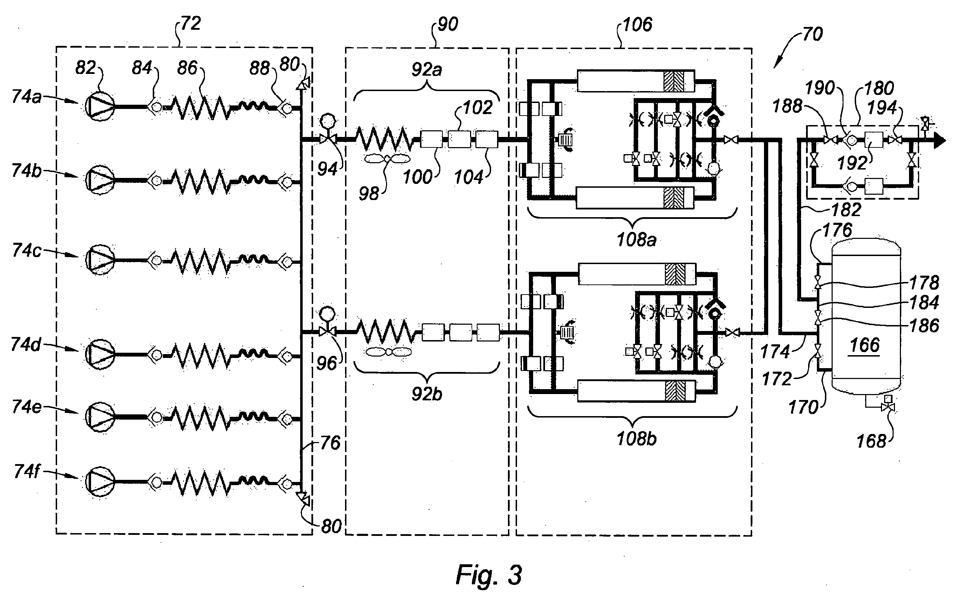

La figure 3 représente une installation 70 pour la production d'air médical. Cette installation 70 est conçue pour fournir un débit maximal dₘₐₓ.

L'installation 70 comporte un groupe de compression 72 composé de lignes de compression 74a à 74f montées en parallèle par une tubulure 76. Les lignes de compression 74a à 74d forment un premier ensemble. Les lignes de compression 74e et 74f forment un second ensemble.

La tubulure 76 est équipée à chacune de ses extrémités d'une soupape 80.

Les lignes de compression 74a à 74d sont prévues pour fonctionner en conditions normales d'utilisation. Celles-ci peuvent fonctionner seule ou conjointement de telle sorte que :
- lorsque la ligne de compression 74a fonctionne seule, le débit de l'installation est égal à dₘₐₓ/4,
- lorsque les lignes de compression 74a et 74b fonctionnent conjointement, le débit de l'installation est égal à 2dₘₐₓ/4 ;
- lorsque les lignes de compression 74a, 74b et 74c fonctionnent conjointement, le débit de l'installation est égal à 3dₘₐₓ/4 ; et
- lorsque les lignes de compression 74a à 74d fonctionnent conjointement, le débit de l'installation est égal à dₘₐₓ.

Les lignes de compression 74e et 74f sont prévues pour fonctionner lorsqu'une ou plusieurs des lignes de compression 74a à 74d sont au repos, en maintenance ou en panne.

Les lignes de compression 74a à 74f sont identiques. Aussi, seule la ligne de compression 74a est détaillée par la suite. La ligne de compression 74a comprend un compresseur 82 à spirale sèche, c'est-à-dire fonctionnant sans huile, conçu pour fournir un débit d'air égal à dₘₐₓ/4. Le compresseur 82 est monté en série avec un clapet anti-retour 84, un refroidisseur 86, et un clapet anti-retour 88.

L'installation 2 comporte un groupe de filtration 90 composé de deux lignes de filtration 92a et 92b.

La ligne de filtration 92a est connectée à la tubulure 76, et par suite aux lignes de compression 74a à 74c, par une vanne pneumatique 94. La ligne de filtration 92b est connectée à la tubulure 76, et par suite aux lignes de compression 74d à 74f, par une vanne pneumatique 96.

Les lignes de filtration 92a et 92b sont identiques. Aussi, seule la ligne de filtration 92a est détaillée par la suite. La ligne de filtration 92a comprend :
- un électro-refroidisseur 98 ;
- un filtre cyclone 100 prévu pour retenir le condensat, c'est-à-dire essentiellement l'eau produite par les lignes de compressions 74a à 74f ;
- un filtre 102 prévu pour retenir les particules de diamètre supérieur ou égal à 1µm ; et
- un filtre 104 prévu pour retenir les particules de diamètre supérieur ou égal à 0,01µm.

L'électro-refroidisseur 98, le filtre cyclone 100 et les filtres 102 et 104 sont montés en série.

L'installation 70 comporte un groupe de séchage 106 composé de deux sécheurs 108a et 108b par adsorption. Le sécheur 108a est monté en série avec la ligne de filtration 92a. Le sécheur 108b est monté en série avec la ligne de filtration 92b.

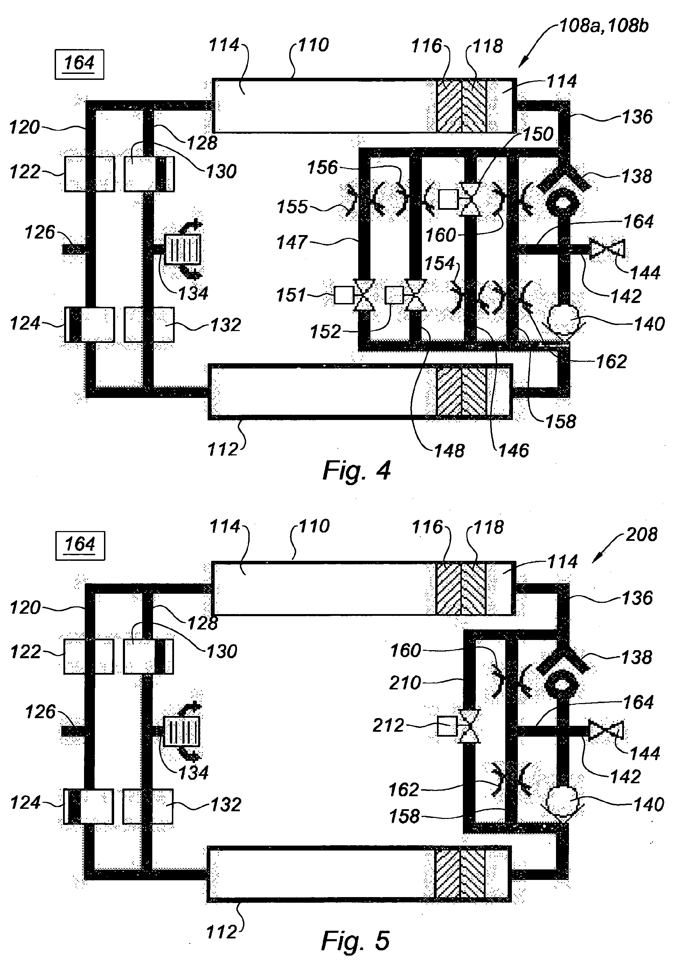

Les sécheurs 108a et 108b sont identiques. Aussi, seul le sécheur 108a (représenté à la figure 4) est détaillé par la suite.

Le sécheur 108a comprend des colonnes 110 et 112 montées en parallèle. Les colonnes 110 et 112 sont chacune équipée de deux lits de matière dessicante 114, telle que de l'alumine, enserrant un lit de charbon actif 116, et un lit d'hopcalite 118. En variante, le nombre de lits de matière dessicante ou la matière de ces lits peut être distincts.

La colonne 110 est prévue pour sécher l'air issu de la ligne de filtration 92a tandis que la colonne 112 est régénérée, et en alternance la colonne 112 est prévue pour sécher l'air issu de la ligne de filtration 92a tandis que la colonne 110 est régénérée.

Le sécheur 108a comprend des moyens de circulation d'air raccordant fluidiquement les colonnes 110 et 112. Ces moyens de circulation d'air sont constitués :
- d'une tubulure 120 reliant les extrémités amont des colonnes 110 et 112, équipée de deux vannes 122 et 124 tout ou rien ;
- d'une tubulure 126 connectée à la tubulure 120 et à la ligne de filtration 92a, prévue pour amener l'air issu de cette ligne de filtration 92a ;
- d'une tubulure 128 reliant les extrémités amont des colonnes 110 et 120, équipée de deux vannes 130 et 132 tout ou rien ;
- d'une tubulure 134 connectée à la tubulure 128 entre les vannes 130 et 132, équipée d'un silencieux, et prévue pour évacuer l'air issu de la colonne 110 ou 112 régénérée, dans l'air ambiant ;
- d'une tubulure 136 reliée aux extrémités aval des colonnes 110 et 112, équipée d'un clapet 138 anti-retour autorisant l'écoulement de l'air dans un premier sens, et d'un clapet 140 anti-retour autorisant l'écoulement de l'air dans un second sens ;
- d'une tubulure 142 connectée à la tubulure 136 entre les clapets anti-retour 138 et 140, équipée d'une vanne 144 tout ou rien ;
- de tubulures 146, 147, et 148 montées en parallèle à la tubulure 136, équipée de vannes tout ou rien, respectivement, 150, 151, et 152, et d'orifices calibrés, respectivement, 154, 155, et 156 ;
- d'une tubulure 158 montée en parallèle avec les tubulures 146, 147 et 148, équipée de deux orifices calibrés 160 et 162; et
- d'une tubulure 164 connectée d'une part à la tubulure 158 entre les orifices calibrés 160 et 162, et d'autre part à la tubulure 142.

Le sécheur 108a comprend des moyens de mesure (non représentés) des teneurs en eau et en dioxyde de carbone de l'air traversant les colonnes 110 et 112.

Le sécheur 108a comprend une unité de commande 164 adaptée pour commander les vannes 122, 124, 130, 132, 150, 151 et 152.

L'unité de commande 164 est configurée pour, pendant un temps T_{N:}
- conduire l'air issu de la ligne de filtration 92a à l'intérieur de la colonne 110 ;
- déterminer le volume total d'air traversant la colonne 110, ou une grandeur représentative de ce volume ;
- répartir le volume d'air issu de la colonne 110 en un premier volume dirigé vers la tubulure 142, et en un second volume dirigé vers la colonne 112 pour la régénérer.

Le second volume est compris entre 15% et 20% du volume total d'air ayant traversé la colonne 112 pendant un temps T_{N-1} précédant immédiatement le temps T_{N}. Le temps T_{N-1} est égal au temps T_{N}, c'est-à-dire de même durée.

A cette fin, pendant le temps T_{N} l'unité de commande 164 positionne les vannes 122 et 132 à l'état passant, et les vannes 124 et 130 à l'état bloquant.

L'unité de commande 164 détermine le nombre de lignes de compression 74a à 74f en fonctionnement de telle sorte que :
- si le nombre de lignes de compression 74a à 74f en fonctionnement est égal à 1, l'unité de commande 164 positionne les vannes 150, 151 et 152 à l'état bloquant ;
- si le nombre de lignes de compression 74a à 74f en fonctionnement est égal à 2, l'unité de commande 164 positionne la vanne 150 à l'état passant, et les vannes 151, et 152 à l'état bloquant ;
- si le nombre de lignes de compression 74a à 74f en fonctionnement est égal à 3, l'unité de commande 164 positionne les vannes 150 et 151 à l'état passant et la vanne 152 à l'état bloquant ; et
- si le nombre de lignes de compression 74a à 74f en fonctionnement est égal à 4, l'unité de commande 164 positionne les vannes 150, 151 et 152 à l'état passant.

Par exception, si les teneurs en eau et en dioxyde de carbone de l'air ayant traversé la colonne 112 sont inférieures à des valeurs prédéterminées, l'unité de commande 164 positionne la vanne 132 à l'état bloquant pendant le temps T_{N}, la colonne 112 ne nécessitant pas d'être régénérée.

De façon identique, l'unité de commande 164 est configurée pour, pendant un temps T_{N+1:}
- conduire l'air issu de la ligne de filtration 92a à l'intérieur de la colonne 112 ;
- déterminer le volume total d'air traversant la colonne 112 ou une grandeur représentative de ce volume ;
- répartir le volume d'air issu de la colonne 112 en un premier volume dirigé vers la tubulure 142, et en un second volume dirigé vers la colonne 110 pour la régénérer, le second volume étant compris entre 15% et 20% du volume total d'air ayant traversé la colonne 112 pendant le temps T_{N}. Le temps T_{N+1} est égal au temps T_{N}.

A cette fin, pendant le temps T_{N+1} l'unité de commande 164 positionne les vannes 124 et 130 à l'état passant, et les vannes 122 et 132 à l'état bloquant.

L'unité de commande 164 détermine le nombre de lignes de compression 74a à 74f en fonctionnement de telle sorte que :
- si le nombre de lignes de compression 74a à 74f en fonctionnement est égal à 1, l'unité de commande 164 positionne les vannes 150, 151et 152 à l'état bloquant ;
- si le nombre de lignes de compression 74a à 74f en fonctionnement est égal à 2, l'unité de commande 164 positionne la vanne 150 à l'état passant, et les vannes 151 et 152 à l'état bloquant ;
- si le nombre de lignes de compression 74a à 74f en fonctionnement est égal à 3, l'unité de commande 164 positionne les vannes 150 et 151 à l'état passant et la vanne 152 à l'état bloquant, et
- si le nombre de lignes de compression 74a à 74f en fonctionnement est égale à 4, l'unité de commande 164 positionne les vannes 150, 151 et 152 à l'état passant.

Par exception, si les teneurs en eau et en dioxyde de carbone de l'air ayant traversé la colonne 110 pendant le temps T_{N,} sont inférieures à des valeurs prédéterminées, l'unité de commande 164 positionne la vanne 130 à l'état bloquant, la colonne 110 ne nécessitant pas d'être régénérée.

Il va de soi que l'installation 70 comporte, de préférence, une unique unité de commande 164 pour les sécheurs 108a et 108b, plutôt qu'une pluralité d'unités de commande 164.

L'installation 70 comporte en outre un réservoir 166 prévu d'une part pour stocker l'air issu du groupe de séchage et d'autre part pour maintenir les colonnes 110 et 112 des sécheurs 108a ou 108b sous pression lorsque ceux-ci sont au repos. Le réservoir 166 est équipé d'une vanne 168 de vidange en partie inférieure pour permettre l'évacuation périodique de la couche de dioxyde de carbone en partie basse.

L'installation 70 comporte une tubulure 170 équipée d'une vanne 172 tout ou rien. La tubulure 70 est prévue pour conduire l'air issu du groupe de séchage 106 au niveau d'une partie inférieure du réservoir 166. A cette fin, la tubulure 170 est connectée aux sécheurs 108a ou 108b par une tubulure 174.

L'installation 70 comporte une tubulure 176 équipée d'une vanne 178 tout ou rien. La tubulure 176 est prévue pour conduire l'air issu d'une partie supérieure du réservoir 166 vers un groupe de filtration 180. A cette fin, la tubulure 176 est connectée audit groupe de filtration par une tubulure 182.

L'installation 70 comporte une tubulure 184, équipée d'une vanne 186, formant dérivation entre les tubulures 170 et 176.

Le groupe de filtration 180 est agencé pour réaliser une ultime filtration de l'air avant d'alimenter un réseau de distribution. Le groupe de filtration 180 est composé de deux branches identiques montées en parallèle. Chaque branche comprend une vanne 188, un clapet anti-retour 190, un filtre à particules 192, et un clapet anti-retour 194 montés en série.

Dans une autre forme d'exécution de l'installation 70, le sécheur 108a et/ou 108b sont remplacés par des sécheurs 208 (représentés à la figure 5).

Le sécheur 208 est identique au sécheur 108a à l'exception que les tubulures 146 et 148 sont omises et sont remplacées par une tubulure 210. Cette tubulure 210 est équipée d'une vanne 212 proportionnelle.

Pendant le temps T_{N} l'unité de commande 164 positionne les vannes 122 et 132 à l'état passant, et les vannes 124 et 130 à l'état bloquant.

L'unité de commande 164 détermine le nombre de lignes de compression 74a à 74f en fonctionnement de telle sorte que :
- si le nombre de lignes de compression 74a à 74f en fonctionnement est égal à 1, l'unité de commande 164 positionne la vanne 212 à l'état bloquant.
- si le nombre de lignes de compression 74a à 74f en fonctionnement est égal à 2, 3 ou 4, l'unité de commande 164 positionne la vanne 212 dans un état passant, pour que le second volume dirigé vers la colonne 112 pour la régénérer soit compris entre 15% et 20% du volume total d'air ayant traversé la colonne 112 pendant le temps T_{N-1}.

Par exception, si les teneurs en eau et en dioxyde de carbone de l'air ayant traversé la colonne 112 pendant le temps T_{N-1} sont inférieures à des valeurs prédéterminées, l'unité de commande 164 positionne la vanne 212 à l'état bloquant, la colonne 112 nécessitant pas d'être régénérée.

De façon identique, pendant le temps T_{N+1} l'unité de commande 164 positionne les vannes 124 et 130 à l'état passant, et les vannes 122 et 132 à l'état bloquant.

L'unité de commande 164 détermine le nombre de lignes de compression 74a à 74f en fonctionnement de telle sorte que :
- si le nombre de lignes de compression 74a à 74f en fonctionnement est égal à 1, l'unité de commande 164 positionne la vanne 212 à l'état bloquant.
- si le nombre de lignes de compression 74a à 74f en fonctionnement est égal à 2, 3 ou 4, l'unité de commande 164 positionne la vanne 212 dans un état passant, pour que le second volume dirigé vers la colonne 110 pour la régénérer soit compris entre 15% et 20% du volume total d'air ayant traversé la colonne 110 pendant le temps T_{N-1}.

Par exception, si les teneurs en eau et en dioxyde de carbone de l'air ayant traversé la colonne 110 pendant le temps T_{N-1} sont inférieures à des valeurs prédéterminées, l'unité de commande 164 positionne, la vanne 212 à l'état bloquant, la colonne 110 nécessitant pas d'être régénérée.

Comme il va de soi, l'invention ne se limite pas aux seules forme d'exécution de l'installation décrites ci-dessus à titre d'exemple, elle en embrasse au contraire toutes les variantes de réalisation.

En variante, dans le groupe de séchage 108a ou 108b le nombre de tubulures montées en parallèle à la tubulure 136, équipées de vannes tout ou rien, et d'orifices calibrés, peut être égal au nombre de lignes de compression, c'est-à-dire six.

Le nombre de compresseurs est donné uniquement à titre indicatif et pourrait être différent.

## Revendications

1. Installation (70) pour la production d'air médical conçue pour fournir un débit maximal dₘₐₓ, **caractérisée en ce qu'**elle comporte :
- un réservoir (166) et un groupe de compression (72) comportant :
• un premier ensemble comprenant au moins deux compresseurs (74a-74d, 82) identiques, montés en parallèles, adaptés pour fournir conjointement un débit d'air égal au débit maximal dₘₐₓ de l'installation; et
• un second ensemble comprenant au moins deux compresseurs (74e-74f, 82) montés en parallèles aves les deux compresseurs (74a-74d, 82) du premier ensemble, identiques aux deux compresseurs (74a-74d, 82) du premier ensemble, et chacun prévu pour fonctionner en alternance à la place d'un compresseur (74a-74d, 82) du premier ensemble ;
- un groupe de séchage (106) comportant des premier et second sécheurs (108a, 108b ; 208) par adsorption, le second sécheur (108b) étant prévu pour fonctionner en alternance à la place du premier sécheur (108a), les premier et second sécheurs (108a, 108b) comprenant chacun :
• des première et seconde colonnes (110, 112) montées en parallèle, chacune équipée d'au moins un lit de matière dessicante (114), la première colonne (110) étant prévue pour sécher l'air issu du groupe de compression (72) tandis que la seconde colonne (112) est régénérée, et en alternance la seconde colonne (112) étant prévue pour sécher l'air issu du groupe de compression (72) tandis que la première colonne (110) est régénérée ;
• des moyens de circulation d'air raccordant fluidiquement les première et seconde colonnes (110, 112);
• une unité de commande (164) des moyens de circulation d'air configurée pour, pendant un temps T_{N} :
∘ conduire l'air issu du groupe de compression (72) à l'intérieur de la première colonne (110) ;
∘ déterminer le volume total d'air traversant la première colonne (110) ;
∘ répartir le volume d'air issu de la première colonne (110) en un premier volume dirigé vers le réservoir (166), et en un second volume, dit de régénération, dirigé vers la seconde colonne (112) pour la régénérer, le volume de régénération étant fonction du volume total d'air ayant traversé la seconde colonne (112) pendant un temps T_{N-1} précédant immédiatement le temps T_{N}.

2. Installation (70) selon la revendication 1, **caractérisée en ce que** les temps T_{N-1} et T_{N} sont égaux ; et
**en ce que** l'unité de commande (164) des moyens de circulation est configurée pour que, pendant le temps T_{N}, le volume de régénération soit compris entre 10% et 25% du volume d'air ayant traversé la seconde colonne (112) pendant le temps T_{N-1}.

3. Installation (70) selon l'une quelconque des revendications 1 et 2, **caractérisée en ce que** les moyens de circulation d'air de chaque sécheur (108a, 108b) comprennent :
- une première tubulure (136) reliée aux extrémités aval des première et seconde colonnes (110, 112), équipée d'un premier clapet anti-retour (138) autorisant l'écoulement de l'air dans un premier sens, et d'un second clapet anti-retour (140) autorisant l'écoulement de l'air dans un second sens ;
- au moins une deuxième tubulure (146, 147,148) montée en parallèle à la première tubulure (136), équipée d'une vanne tout ou rien (150, 151,152) et d'un orifice calibré (154, 155, 156) ;
- une troisième tubulure (142) connectée d'une part à la première tubulure (136) entre les premier et second clapets (138, 140) et d'autre part au réservoir (166); et
**en ce que** l'unité de commande (164) est configurée pour commander les vannes tout ou rien (150, 151, 152) de manière à diriger le volume de régénération vers la seconde colonne (112) pour la régénérer.

4. Installation (70) selon l'une quelconque des revendications 1 et 2, **caractérisée en ce que** les moyens de circulation d'air de chaque sécheur (208) comprennent:
- une première tubulure (136) reliée aux extrémités aval des première et seconde colonnes (110, 112), équipée d'un premier clapet anti-retour (138) autorisant l'écoulement de l'air dans un premier sens, et d'un second clapet anti-retour (140) autorisant l'écoulement de l'air dans un second sens ;
- une deuxième tubulure (210) montée en parallèle à la première tubulure (136), équipée d'une vanne proportionnelle (212) ; et
- une troisième tubulure (142) connectée d'une part à la première tubulure (136) entre les premier et second clapets (138, 140) et d'autre part au réservoir (166) ; et
**en ce que** l'unité de commande (164) est configurée pour commander la vanne proportionnelle (212) de manière à diriger le volume de régénération vers la seconde colonne (112) pour la régénérer.

5. Installation (70) selon l'une quelconque des revendications 3 et 4, **caractérisée en ce que** les moyens de circulation d'air de chaque sécheur (108a, 108b ; 208) comprennent :
- une quatrième tubulure (158) montée en parallèle à la ou chaque deuxième tubulure (146, 148 ; 210), équipée de deux orifices calibrés (160, 162) ; et
- une cinquième tubulure (164) connectée d'une part à la quatrième tubulure (158) entre ses orifices calibrés et d'autre part à la troisième tubulure (142).

6. Installation (70) selon la revendication 5, **caractérisée en ce que** les moyens de circulation d'air de chaque sécheur (108a, 108b) comprennent :
- une sixième tubulure (120) reliant les extrémités amont des première et seconde colonnes (110, 112), équipée de deux vannes tout ou rien (122, 124) ;
- une septième tubulure (128) reliant les extrémités amont des première et seconde colonnes (110, 112), équipée de deux vannes tout ou rien (130, 132) ;
- une huitième tubulure (126) connectée à la sixième tubulure (120) entre ses deux vannes tout ou rien (122, 124), prévue pour amener l'air issu du groupe de compression (72); et
- une neuvième tubulure (134) connectée à la septième tubulure (128) entre ses deux vannes tout ou rien (130, 132), prévue pour évacuer dans l'air ambiant l'air issu de la première ou seconde colonnes (110, 112) régénérée.

7. installation (70) selon la revendication 6, **caractérisée en ce que** chaque sécheur (108a, 108b) comprend des moyens de mesure des teneurs en eau et en dioxyde de carbone de l'air traversant la première colonne (110) ; et
**en ce que** l'unité de commande (164) est configurée pour positionner les vannes tout ou rien (130, 132) de la septième tubulure (128) à l'état bloquant, de manière à interdire la circulation de l'air dans celle-ci pendant un temps T_{N+1} suivant immédiatement le temps T_{N}, lorsque les teneurs en eau et en dioxyde de carbone mesurées pendant le temps T_{N} sont inférieures à des valeurs prédéterminées.

8. Installation (70) selon l'une quelconque des revendications 1 à 7, **caractérisé en ce que** les première et seconde colonnes (110, 112) de chaque sécheur (108a, 108b) comprennent un lit de charbon actif (116) et/ou un lit d'hopcalite (118).

9. Installation (70) selon l'une quelconque des revendications 1 à 8, **caractérisée en ce qu'**elle comporte :
- des premiers moyens de raccordement (170, 172, 174) agencés pour conduire l'air issu du groupe de séchage (106) au niveau d'une partie inférieure du réservoir (166) ;
- un groupe de filtration (180) ;
- des seconds moyens de raccordement (176, 182) agencés pour conduire l'air issu d'une partie supérieure du réservoir (166) vers le groupe de filtration (180).

10. Installation (70) selon l'une quelconque des revendications 1 à 9, **caractérisé en ce que** les premier, deuxième, troisième et quatrième compresseurs (74a-74f, 82) sont des compresseurs à spirale sèche.

## Patentansprüche

1. Anlage (70) zum Erzeugen medizinischer Luft, die konzipiert ist, um einen maximalen Durchsatz dₘₐₓ zu liefern, **dadurch gekennzeichnet, dass** sie Folgendes umfasst:
- einen Behälter (166) und ein Verdichtungsaggregat (72), das Folgendes umfasst:
-- eine erste Einheit, die mindestens zwei identische Verdichter (74a-74d, 82), die parallel installiert sind, umfasst, die angepasst sind, um gemeinsam einen Luftdurchsatz gleich dem maximalen Durchsatz dₘₐₓ der Anlage zu liefern, und
-- eine zweite Einheit, die mindestens zwei Verdichter (74e-74f, 82) umfasst, die mit den zwei Verdichtern (74a- 74d, 82) der ersten Einheit parallel installiert sind, die mit den zwei Verdichtern (74a-74d, 82) der ersten Anordnung identisch und jeweils vorgesehen sind, um abwechselnd an Stelle eines Verdichters (74a- 74d, 82) der ersten Anordnung zu arbeiten,
- ein Trockenaggregat (106), das einen ersten und einen zweiten Trockner (108a, 108b; 208) durch Adsorption umfasst, wobei der zweite Trockner (108b) vorgesehen ist, um abwechselnd an Stelle des ersten Trockners (108a) zu arbeiten, wobei der erste und zweite Trockner (108a, 108b) jeweils Folgendes umfassen:
-- eine erste und eine zweite Säule (110, 112), die parallel installiert sind, wobei jede mit mindestens einem Trockenmittelbett (114) ausgestattet ist, wobei die erste Säule (110) vorgesehen ist, um die Luft zu trocknen, die aus dem Verdichtungsaggregat (72) stammt, während die zweite Säule (112) regeneriert wird, und wobei die zweite Säule (112) abwechselnd vorgesehen ist, um Luft zu trocknen, die aus dem Verdichtungsaggregat (72) stammt, während die erste Säule (110) regeneriert wird,
-- Luftzirkulationsmittel, die die erste und die zweite Säule (110, 112) lufttechnisch anschließen,
-- eine Steuereinheit (164) der Luftzirkulationsmittel, die ausgelegt ist, um während einer Zeit T_{N}:
--- Luft, die aus dem Verdichtungsaggregat (72) stammt, zu dem Inneren der ersten Säule (110) zu leiten,
--- das Gesamtluftvolumen zu bestimmen, das die erste Säule (110) durchquert,
--- das Luftvolumen, das aus der ersten Säule (110) stammt, in einem ersten Volumen, das zu dem Behälter (166) gelenkt wird, und in ein zweites Volumen, Regenerierungsvolumen genannt, das zu der zweiten Säule (112) gelenkt wird, um sie zu regenerieren, zu verteilen, wobei das Regenerierungsvolumen von dem Gesamtluftvolumen abhängt, das die zweite Säule (112) während einer Zeit T_{N-1}, die der Zeit T_{N} unmittelbar vorausgeht, durchquert hat.

2. Anlage (70) nach Anspruch 1, **dadurch gekennzeichnet, dass** die Zeiten T_{N-1} und T_{N} gleich sind, und
dass die Steuereinheit (164) der Zirkulationsmittel konfiguriert ist damit während der Zeit T_{N} das Regenerierungsvolumen zwischen 10 % und 25 % des Luftvolumens, das die zweite Säule (112) während der Zeit T_{N-1} durchquert hat, liegt.

3. Anlage (70) nach einem der Ansprüche 1 und 2, **dadurch gekennzeichnet, dass** die Luftzirkulationsmittel jedes Trockners (108a, 108b) Folgendes umfassen:
- einen ersten Rohrstutzen (136), der mit den stromabwärtigen Enden der ersten und der zweiten Säule (110, 112) verbunden ist, der mit einem ersten Rückschlagventil (138) ausgestattet ist, das das Fließen der Luft in eine erste Richtung gestattet, und mit einem zweiten Rückschlagventil (140), das das Fließen der Luft in eine zweite Richtung gestattet,
- mindestens einen zweiten Rohrstutzen (146, 147, 148), der zu dem ersten Rohrstutzen (136) parallel installiert ist, der mit einem Ein-/Aus-Ventil (150, 151, 152) und einer kalibrierten Öffnung (154, 155, 156) ausgestattet ist,
- einen dritten Rohrstutzen (142), der einerseits mit dem ersten Rohrstutzen (136) zwischen dem ersten und dem zweiten Ventil (138, 140) und andererseits mit dem Behälter (166) verbunden ist, und
dass die Steuereinheit (164) konfiguriert ist, um die Ein-/Aus-Schieber (150, 151, 152) derart zu steuern, dass das Regenerierungsvolumen zu der zweiten Säule (112) gelenkt wird, um sie zu regenerieren.

4. Anlage (70) nach einem der Ansprüche 1 und 2, **dadurch gekennzeichnet, dass** die Luftzirkulationsmittel jedes Trockners (208) Folgendes umfassen:
- einen ersten Rohrstutzen (136), der mit den stromabwärtigen Enden der ersten und der zweiten Säule (110, 112) verbunden ist, der mit einem ersten Rückschlagventil (138) ausgestattet ist, das das Fließen der Luft in eine erste Richtung gestattet, und mit einem zweiten Rückschlagventil (140), das das Fließen der Luft in eine zweite Richtung gestattet,
- einen zweiten Rohrstutzen (210), der zu dem ersten Rohrstutzen (136) parallel installiert ist, der mit einem Proportionalventil (212) ausgestattet ist, und
- einen dritten Rohrstutzen (142), der einerseits mit dem ersten Rohrstutzen (136) zwischen dem ersten und dem zweiten Ventil (138, 140) und andererseits mit dem Behälter (166) verbunden ist, und
dass die Steuereinheit (164) konfiguriert ist, um das Proportionalventil (212) derart zu steuern, dass das Regenerierungsvolumen zu der zweiten Säule (112) gelenkt wird, um sie zu regenerieren.

5. Anlage (70) nach einem der Ansprüche 3 und 4, **dadurch gekennzeichnet, dass** die Luftzirkulationsmittel jedes Trockners (108a, 108b; 208) Folgendes umfassen:
- einen vierten Rohrstutzen (158), der parallel zu dem oder jedem zweiten Rohrstutzen (146, 148; 210) installiert ist, der mit zwei kalibrierten Öffnungen (160, 162) ausgestattet ist, und
- einen fünften Rohrstutzen (164), der einerseits mit dem vierten Rohrstutzen (158) zwischen seinen kalibrierten Öffnungen und andererseits mit dem dritten Rohrstutzen (142) verbunden ist.

6. Anlage (70) nach Anspruch 5, **dadurch gekennzeichnet, dass** die Luftzirkulationsmittel jedes Trockners (108a, 108b) Folgendes umfassen:
- einen sechsten Rohrstutzen (120), der die stromaufwärtigen Enden der ersten und der zweiten Säule (110, 112) verbindet, der mit zwei Ein-/Aus-Schiebern (122, 124) ausgestattet ist,
- einen siebten Rohrstutzen (128), der die stromaufwärtigen Enden der ersten und zweiten Säule (110, 112) verbindet, der mit zwei Ein-/Aus-Schiebern (130, 132) ausgestattet ist,
- einen achten Rohrstutzen (126), der mit dem sechsten Rohrstutzen (120) zwischen seinen zwei Ein-/Aus-Schiebern (122, 124) verbunden ist, der vorgesehen ist, um die Luft, die aus dem Verdichtungsaggregat (72) stammt, zuzuführen,
- einen neunten Rohrstutzen (134), der mit dem siebten Rohrstutzen (128) zwischen seinen zwei Ein-/Aus-Schiebern (130, 132) verbunden ist, der vorgesehen ist, um in die Umgebungsluft die Luft abzuleiten, die aus der regenerierten ersten oder der zweiten Säule (110, 112) stammt.

7. Anlage (70) nach Anspruch 6, **dadurch gekennzeichnet, dass** jeder Trockner (108a, 108b) Mittel zum Messen des Gehalts an Wasser und an Kohlenstoffdioxid der Luft, die die erste Säule (110) durchquert, umfasst, und
dass die Steuereinheit (164) konfiguriert ist, um die Ein-/Aus-Schieber (130, 132) des siebten Rohrstutzens (128) im blockierenden Zustand derart zu positionieren, dass die Zirkulation der Luft in diesen während einer Zeit T_{N+1}, die unmittelbar auf die Zeit T_{N} folgt, zu untersagen, wenn die Gehalte an Wasser und Kohlendioxid, die während der Zeit T_{N} gemessen werden, niedriger sind als vorbestimmte Werte.

8. Anlage (70) nach einem der Ansprüche 1 bis 7, **dadurch gekennzeichnet, dass** die erste und die zweite Säule (110, 112) jedes Trockners (108a, 108b) ein Aktivkohlebett (116) und/oder ein Hopcalitebett (118) umfassen.

9. Anlage (70) nach einem der Ansprüche 1 bis 8, **dadurch gekennzeichnet, dass** sie Folgendes umfasst:
- erste Anschlussmittel (170, 172, 174), die eingerichtet sind, um Luft, die aus dem Trockenaggregat (106) stammt, in den Bereich eines unteren Teils des Behälters (166) zu leiten,
- ein Filteraggregat (180),
- zweite Anschlussmittel (176, 182), die eingerichtet sind, um Luft, die aus einem oberen Teil des Behälters (166) stammt, zu dem Filteraggregat (180) zu leiten.

10. Anlage (70) nach einem der Ansprüche 1 bis 9, **dadurch gekennzeichnet, dass** der erste, zweite, dritte und vierte Verdichter (74a- 74d, 82) Trocken-Scrollverdichter sind.

## Claims

1. An installation (70) for producing medical air designed to provide a maximum flow rate dₘₐₓ, **characterized in that** it includes:
- a tank (166) and a compression unit (72) including:
• a first assembly comprising at least two identical compressors (74a-74d, 82), mounted in parallel, adapted to provide together an air flow rate equal to the maximum flow rate dₘₐₓ of the installation; and
• a second assembly comprising at least two compressors (74e-74f, 82) mounted in parallel with the two compressors (74a-74d, 82) of the first assembly, identical to the two compressors (74a-74d, 82) of the first assembly, and each provided to alternately operate instead of a compressor (74a-74d, 82) of the first assembly;
- a drying unit (106) including first and second adsorption dryers (108a, 108b; 208), the second dryer (108b) being provided to alternately operate instead of the first dryer (108a), the first and second dryers (108a, 108b) each comprising:
• first and second columns (110, 112) mounted in parallel, each equipped with at least one desiccant material bed (114), the first column (110) being provided to dry the air coming from the compression unit (72) while the second column (112) is regenerated, and alternately the second column (112) being provided to dry the air coming from the compression unit (72) while the first column (110) is regenerated;
• air circulation means fluidly joining the first and second columns (110, 112);
• a control unit (164) of the air circulation means configured, during a time T_{N}, to:
o conduct the air coming from the compression unit (72) within the first column (110);
o determine the total volume of air passing through the first column (110);
o distribute the volume of air coming from the first column (110) into a first volume directed to the tank (166), and into a second volume, called regeneration volume, directed to the second column (112) in order to regenerate it, the regeneration volume being dependent on the total volume of air having passed through the second column (112) during a time T_{N-1} immediately preceding the time T_{N}.

2. The installation (70) according to claim 1, **characterized in that** the time T_{N-1} and T_{N} are equal; and
**in that** the control unit (164) of the circulation means is configured so that, during the time T_{N}, the regeneration volume is comprised between 10% and 25% of the volume of air having passed through the second column (112) during the time T_{N-1.}

3. The installation (70) according to any one of claims 1 and 2, **characterized in that** the air circulation means of each dryer (108a, 108b) comprise:
- a first tubing (136) linked to the downstream ends of the first and second columns (110, 112), equipped with a first check valve (138) allowing the flow of the air in a first direction, and a second check valve (140) allowing the flow of the air in a second direction;
- at least a second tubing (146, 147, 148) mounted in parallel with the first tubing (136), equipped with an on-off valve (150, 151, 152) and a calibrated orifice (154, 155, 156);
- a third tubing (142) connected on the one hand to the first tubing (136) between the first and second valves (138, 140) and on the other hand to the tank (166); and
**in that** the control unit (164) is configured to control the on-off valves (150, 151, 152) so as to direct the regeneration volume to the second column (112) in order to regenerate it.

4. The installation (70) according to any one of claims 1 and 2, **characterized in that** the air circulation means of each dryer (208) comprise:
- a first tubing (136) linked to the downstream ends of the first and second columns (110, 112), equipped with a first check valve (138) allowing the flow of the air in a first direction, and a second check valve (140) allowing the flow of the air in a second direction;
- a second tubing (210) mounted in parallel with the first tubing (136), equipped with a proportional valve (212); and
- a third tubing (142) connected on the one hand to the first tubing (136) between the first and second valves (138, 140) and on the other hand to the tank (166); and
**in that** the control unit (164) is configured to control the proportional valve (212) so as to direct the regeneration volume to the second column (112) in order to regenerate it.

5. The installation (70) according to any one of claims 3 and 4, **characterized in that** the air circulation means of each dryer (108a, 108b; 208) comprise:
- a fourth tubing (158) mounted in parallel with the or each second tubing (146, 148, 210), equipped with two calibrated orifices (160, 162); and
- a fifth tubing (164) connected on the one hand to the fourth tubing (158) between its calibrated orifices and on the other hand to the third tubing (142).

6. The installation (70) according to claim 5, **characterized in that** the air circulation means of each dryer (108a, 108b) comprise:
- a sixth tubing (120) linking the upstream ends of the first and second columns (110: 112), equipped with two on-off valves (122, 124);
- a seventh tubing (128) linking the upstream ends of the first and second columns (110: 112), equipped with two on-off valves (130, 132);
- an eighth tubing (126) connected to the sixth tubing (120) between its two on-off valves (122, 124), provided for carrying the air coming from the compression unit (72); and
- a ninth tubing (134) connected to the seventh tubing (128) between its two on-off valves (130, 132), provided for evacuating in the ambient air, the air coming from the first or second regenerated column (110, 112).

7. The installation (70) according to claim 6, **characterized in that** each dryer (108a, 108b) comprises means for measuring the water and carbon dioxide contents of the air passing through the first column (110); and
**in that** the control unit (164) is configured to position the on-off valves (130, 132) of the seventh tubing (128) at the blocking state, so as to prevent the circulation of the air therein during a time T_{N+1} immediately following the time T_{N}, when the water and carbon dioxide contents measured during the time T_{N} are lower than predetermined values.

8. The installation (70) according to any one of claims 1 to 7, **characterized in that** the first and second columns (110, 112) of each dryer (108a, 108b) comprise an activated carbon bed (116) and/or a hopcalite bed (118).

9. The installation (70) according to any one of claims 1 to 8, **characterized in that** it includes:
- first joining means (170, 172, 174) arranged to conduct the air coming from the drying unit (106) at a lower portion of the tank (166);
- a filtration unit (180);
- second joining means (176, 182) arranged to conduct the air coming from an upper portion of the tank (166) to the filtration unit (180).

10. The installation (70) according to any one of claims 1 to 9, **characterized in that** the first, second, third and fourth compressors (74a-74f, 82) are dry scroll compressors.
